# FASCICULE DE BREVET EUROPEEN

(11) **EP 3 093 623 B1**
(45) Date de publication et mention de la délivrance du brevet: **14.03.2018**
(21) Numéro de dépôt: 16167972.5
(22) Date de dépôt: 02.05.2016
(51) Int. Cl.: G01D 5/04, E06B 9/68

(54) **DISPOSITIF DE DETECTION D'UNE POSITION ANGULAIRE D'UN ORGANE ROTATIF, SYSTEME COMPRENANT UN TEL DISPOSITIF ET RIDEAU INTEGRANT UN TEL SYSTEME**
VORRICHTUNG ZUR DETEKTION EINER WINKELPOSITION EINES DREHORGANS, SYSTEM, DAS EINE SOLCHE VORRICHTUNG UMFASST, UND VORHANG, IN DEN EIN SOLCHES SYSTEM INTEGRIERT IST
DEVICE FOR DETECTING THE ANGULAR POSITION OF A ROTARY MEMBER, SYSTEM COMPRISING SUCH A DEVICE AND CURTAIN INCLUDING SUCH A SYSTEM

(30) Priorité: 13.05.2015 FR 1554331
(43) Date de publication de la demande: 16.11.2016
(73) Titulaire: Souchier-Boullet, 77185 Lognes (FR)
(72) Inventeur: ROCTON, Philippe, 77860 Quincy Voisins (FR); JAEGER, Thierry, 90000 Belfort (FR); MAILLART, David, 77700 Magny le Hongre (FR)
(74) Mandataire: Cabinet Armengaud Aîné

(56) Documents cités:
- FR-A1- 2 756 320
- FR-A1- 2 987 112
- US-A- 5 121 558
- US-A1- 2008 079 423

## Description

### Domaine technique

L'invention concerne un dispositif de détection d'une position angulaire d'un organe rotatif. Elle concerne également un système comprenant un tel dispositif. Elle concerne aussi un rideau intégrant un tel système.

Dans son application à un rideau, l'invention se situe plus particulièrement dans le domaine du cantonnement et du compartimentage d'un local. Elle s'applique notamment au cantonnement et au compartimentage d'un local en cas de feu.

L'invention concerne en outre un système de motorisation d'un équipement de fermeture par un rideau enroulable.

On connaît des dispositifs de détection de fin de course qui mettent en oeuvre du comptage électronique. Ceci ne convient pas à toutes les applications, notamment pour des dispositifs de sécurité. Un système de butées mécaniques solidaires de l'organe rotatif ne convient pas si celui-ci doit effectuer plus qu'un tour complet.

D'autres dispositifs nécessitent de placer des capteurs de positions sur la trajectoire de l'élément à entraîner, par exemple un rideau de sécurité. Ceci peut être complexe à mettre en oeuvre, pour un élément comme un rideau, et il faut ensuite des liaisons électriques longues entre les capteurs et par exemple un moteur, en passant éventuellement par une unité de pilotage. Le document FR 2 987 112 A1 décrit un dispositif de détection tel que défini par le préambule de la revendication 1. Le but de l'invention est de remédier à ces inconvénients en proposant un dispositif de détection fiable et simple à mettre en oeuvre, convenant même pour le cas où l'organe rotatif doit effectuer plus qu'un tour complet.

Un autre but de l'invention est de proposer un système combinant un tel dispositif de détection et un dispositif de motorisation.

Encore un autre but de l'invention est de proposer un rideau à déploiement gravitationnel en manque de courant utilisant un tel système.

### Exposé de l'invention

On atteint au moins l'un des objectifs précités avec un dispositif de détection d'une position d'un élément entraîné par un organe rotatif sur une course correspondant à plus qu'un tour complet de l'organe rotatif.

Selon l'invention, le dispositif de détection comprend :
- un stator,
- un organe de couplage mobile en rotation par rapport au stator et capable d'être couplé en rotation avec l'organe rotatif,
- un mécanisme de transformation de mouvement monté fonctionnellement entre l'organe de couplage et au moins un organe mené,
- des moyens de détection pour détecter la présence d'au moins un organe mené dans une position de déclenchement prédéterminée.

Selon l'invention, les moyens de transformation sont tels que l'organe mené ne passe qu'une seule fois par la position de déclenchement prédéterminée lorsque l'organe rotatif effectue plus d'un tour de rotation dans le même sens. Selon l'invention, l'organe mené peut être mené entre une position initiale et la position de déclenchement prédéterminée et le dispositif selon l'invention comprend des moyens de réglage de la position initiale de l'organe mené.

De préférence, le dispositif selon l'invention peut comprendre d'autres moyens de détection pour détecter la présence de l'organe mené dans au moins une autre position de déclenchement prédéterminée voisine de la position de déclenchement prédéterminée.

Dans un mode de réalisation, pour chaque organe mené, les moyens de détection peuvent comprendre deux détecteurs, l'un pour une commande, l'autre pour une signalisation.

Selon une particularité, l'au moins un organe mené peut comprendre au moins deux organes menés, auxquels que le mécanisme de transformation de mouvement confère des mouvements différents l'un de l'autre, et en ce que les moyens de détection sont capables de détecter la présence de chacun des deux organes menés dans au moins une position prédéterminée respective.

Avantageusement, la position prédéterminée respective de chacun des deux organes menés peut correspondre à une position angulaire de l'organe rotatif, et chaque organe mené est mobile entre sa position de déclenchement prédéterminée et une position initiale qui est réglable pour régler la course angulaire de l'organe rotatif entre les deux positions angulaires respectives précitées.

De préférence, pour régler la position initiale des deux organes menés, on peut régler la position initiale d'un seul des deux organes menés pendant que l'autre est dans sa position de déclenchement prédéterminée.

Dans un mode de réalisation, le dispositif selon l'invention peut comprendre un actionneur des moyens de détection, qui est rappelé en position de repos par un ressort, et qui est placé dans la trajectoire de l'organe mené pour être entraîné vers une position d'activation des moyens de détection lorsque l'organe mené approche de sa position de déclenchement prédéterminée.

Dans un mode préféré, le dispositif comporte des moyens d'échappement pour l'organe mené en position de déclenchement, et le ressort tend à réengager l'organe mené avec le mécanisme de transformation de mouvement lorsque le sens de rotation de l'organe rotatif s'inverse. On évite ainsi que le détecteur soit détruit au cas où le mouvement de l'organe rotatif continuerait au-delà de la position de déclenchement.

En particulier, le mécanisme de transformation de mouvement peut être du type à vis et écrou pour transformer le mouvement rotatif de l'organe de couplage en un mouvement de déplacement longitudinal de l'organe mené.

De préférence, le mécanisme de transformation de mouvement peut comprendre une vis fixée dans une position angulaire et l'organe mené comprend un filetage intérieur en prise avec la vis et une denture extérieure qui engrène avec un pignon allongé axialement entraîné en rotation par l'organe de couplage.

Selon une particularité, des moyens peuvent être prévus pour régler la position angulaire de la vis de façon à régler la position initiale de l'organe mené.

Dans un mode de réalisation, pour son entraînement, le pignon allongé peut engrener avec une denture intérieure de l'organe de couplage.

Avantageusement, le système à vis et écrou peut être à axe de vis parallèle à l'axe de rotation de l'organe de couplage.

Selon une particularité, les moyens de détection peuvent comprendre au moins un contacteur sec relié à trois fils, l'un commun, le deuxième normalement ouvert et le troisième normalement fermé.

Selon un autre aspect de l'invention, il est proposé un système prévu pour être monté dans un logement axial d'un organe rotatif, en particulier un tube porteur d'un rideau enroulable, ledit système comprenant un dispositif de détection selon l'invention.

Selon l'invention, l'organe de couplage peut être supporté en rotation sur le stator par un palier qui est en même temps un palier porteur de l'organe rotatif, tandis que le stator est destiné à être fixé à un bâti, de sorte que le dispositif de détection constitue en même temps un support de l'organe rotatif, en particulier le tube porteur et le rideau fixé sur lui.

En particulier, le système peut être essentiellement logé à l'intérieur du logement axial, sans faire saillie radialement vers l'extérieur par rapport au logement axial.

Dans une mode de réalisation, le système selon l'invention comprend en outre dans le logement axial un dispositif de motorisation comprenant une partie rotorique d'entraînement qui en service est couplée en rotation à l'organe rotatif pour l'entraînement en rotation de celui-ci, et une partie statorique qui est reliée au stator du dispositif de détection par un élément de réaction capable de transmettre au stator du dispositif de détection le couple de réaction du moteur.

Avantageusement, par rapport au dispositif de détection, la partie rotorique d'entraînement est située axialement au-delà de la partie statorique. Le dispositif de motorisation peut être monté dans le logement de l'organe rotatif.

De préférence, l'élément de réaction est un tube fixe s'étendant dans le logement.

Selon une particularité, le dispositif de motorisation comprend un moteur à stator extérieur, la partie statorique reliée au stator extérieur entoure un arbre de transmission entre le rotor du moteur et la partie rotorique d'entraînement, et au moins un palier est agencé entre la partie statorique et l'arbre de transmission.

Avantageusement, le dispositif de motorisation peut comprendre un moteur électrique.

De préférence, le dispositif de motorisation peut comprendre en outre un frein et un réducteur.

Selon un mode de réalisation, des fils d'alimentation du dispositif de motorisation peuvent s'étendre à travers le dispositif de détection dans un canal axial de l'élément de réaction.

Avantageusement, le système selon l'invention permet l'accouplement d'au moins un deuxième organe rotatif au moins indirectement au premier organe rotatif ou à la partie rotorique axialement au-delà du premier organe rotatif, par rapport au dispositif de détection.

Selon un troisième aspect de l'invention, il est proposé un rideau de type à déploiement gravitationnel en manque de courant, équipé d'un système selon le deuxième aspect de l'invention ou l'un de ses perfectionnements, disposé à l'intérieur du tube porteur du rideau, constituant l'organe rotatif auquel le rotor du dispositif de détection et la partie rotorique du dispositif de motorisation sont accouplés.

### Description des figures

D'autres particularités et avantages de l'invention apparaîtront à la lecture de la description détaillée de mises en oeuvre et de modes de réalisation nullement limitatifs, au regard de figures annexées sur lesquelles :
- la figure 1 est une vue en perspective schématique d'un exemple de système 100 selon l'invention, dans l'application d'un enrouleur-dérouleur de rideau de sécurité ;
- la figure 2 est une vue éclatée du système de la figure 1 ;
- la figure 3 est une vue en élévation latérale d'un dispositif de motorisation 200 du système 100, les tubes étant vus partiellement et en coupe axiale ;
- la figure 4 représente une vue schématique en coupe axiale selon AA de la figure 3 ;
- la figure 5 représente en perspective un dispositif de détection 300 du système 100 ;
- les figures 6 et 7 représentent deux coupes longitudinales du dispositif de détection 300, respectivement dans la zone de l'organe de couplage et dans la zone des détecteurs.

### Description de l'invention

Ces modes de réalisation n'étant nullement limitatifs, on pourra notamment réaliser des variantes de l'invention ne comprenant qu'une sélection de caractéristiques décrites par la suite, telles que décrites ou généralisées, isolées des autres caractéristiques décrites, si cette sélection de caractéristiques est suffisante pour conférer un avantage technique ou pour différencier l'invention par rapport à l'état de la technique.

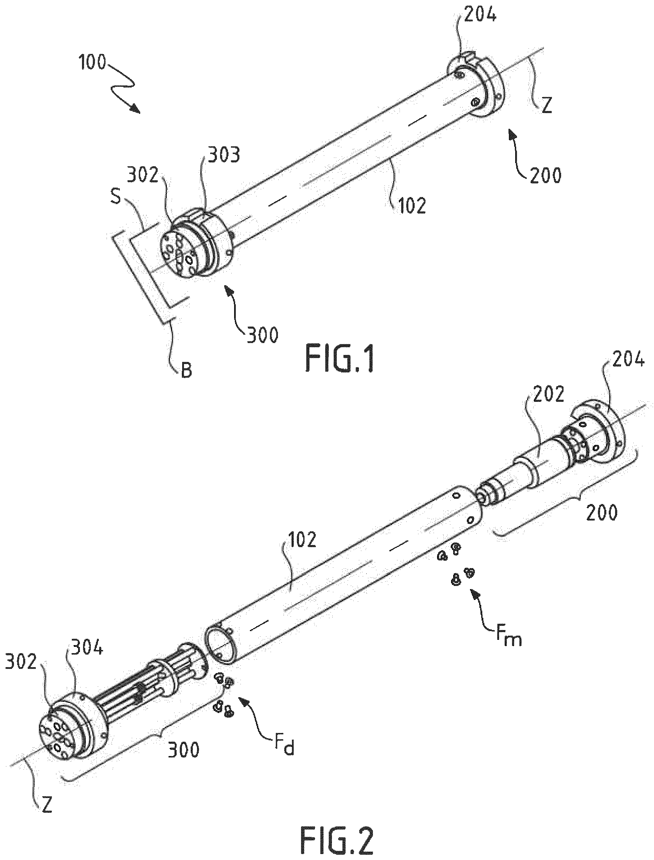

La figure 1 représente schématiquement un système 100 selon l'invention, dans l'exemple d'un système pour l'enroulement et le déroulement d'un rideau enroulable (non représenté) du type à déploiement gravitationnel en manque de courant.

Il s'agit d'un rideau dont le bord supérieur est fixé à un cylindre d'enroulement 103 qui est mû en rotation par un dispositif de motorisation 200 dans le sens de l'enroulement du rideau, et qui se déroule par gravité, notamment en cas de manque de courant. Dans une réalisation, la largeur du rideau et donc la longueur axiale du cylindre d'enroulement peut être de plusieurs mètres, et il est souvent réalisé en segments de par exemple 1 mètre de longueur, fixés les uns aux autres de façon à tourner ensemble, de préférence fixés rigidement les uns aux autres.

Le nombre de tours effectués par le cylindre d'enroulement 103 entre deux positions extrêmes du rideau est supérieur à un, et même souvent égal à plusieurs dizaines, le rideau pouvant avoir une hauteur déroulée d'environ 0,5 mètres à environ 12 mètres selon les applications.

Le système 100 comprend un dispositif de détection 300 selon l'invention, qui dans cette application, a pour fonction de détecter les deux positions extrêmes du rideau enroulable, à savoir complètement enroulé et complètement déroulé.

Le dispositif de détection 300 a la particularité d'être mécanique tout en étant uniquement sensible à la rotation du cylindre d'enroulement 103, sans pouvoir utiliser des butées directement fixées puisque la rotation totale du cylindre d'enroulement 103 entre les deux positions extrêmes est supérieure à un tour.

Dans une réalisation, le dispositif de détection 300 est prévu pour être monté à une extrémité axiale de l'élément rotatif, ici le cylindre d'enroulement 103.

De préférence, le dispositif de détection 300 est non-débordant radialement du cylindre d'enroulement 103. Dans une réalisation, le dispositif de détection 300 se loge en grande partie à l'intérieur du cylindre d'enroulement 103.

On voit en particulier sur la figure 2 que le dispositif de détection 300 comprend un stator 302 prévu pour être solidarisé à un support S qui peut être fixé au bâti B, lequel peut être une paroi de bâtiment. Dans l'exemple, le stator 302 comprend à son extrémité axiale dirigée vers l'extérieur du cylindre d'enroulement 103 une platine de fixation 339 qui est fixée au support S.

Le dispositif de détection 300 comprend en outre un rotor 301 mobile en rotation par rapport au stator 302 et comportant un organe de couplage 304 apte à être couplé en rotation avec un organe rotatif constitué par le cylindre d'enroulement 103 du rideau. A cet effet, l'organe de couplage 304 comporte au moins une conformation de couplage 303 en rotation, ici une rainure de clavette sur la surface extérieure. L'organe de couplage 304 est destiné à être en contact avec la périphérie intérieure du cylindre d'enroulement 103.

Le rotor 301 est supporté en rotation sur le stator 302 par un palier à aiguilles 310 qui est en même temps un palier porteur du cylindre d'enroulement 103 et du rideau qui est en service installé sur le cylindre d'enroulement 103.

Dans l'exemple représenté, l'organe de couplage 304 supporte le poids du cylindre d'enroulement 103 et du rideau, et il est solidaire d'une bague 305, ici la bague extérieure, du palier à aiguilles 310. L'autre bague 322, ici la bague intérieure, du palier à aiguilles 310 est fixée à la platine 339 par des vis 336 qui transmettent le poids du rideau et du cylindre d'enroulement 103 au bâti B par l'intermédiaire du support S.

D'une façon plus générale, le détecteur 300 selon l'invention constitue un support pour l'organe rotatif 103, de sorte que la mise en oeuvre du détecteur 300 selon l'invention dispense de prévoir un moyen spécifique pour supporter en rotation l'organe rotatif à l'une de ses extrémités axiales.

Le dispositif de détection 300 comprend en outre un mécanisme de transformation de mouvement ayant pour fonction de transformer la rotation du cylindre d'enroulement 103 en un mouvement qui ne passe qu'une seule fois par chaque position lorsque l'organe rotatif, ici le cylindre d'enroulement 103, effectue la totalité de sa rotation sur plusieurs tours entre deux positions extrêmes, correspondantes ici aux deux positions extrêmes du rideau précitées.

Dans l'exemple préféré représenté, le mécanisme de transformation transforme le mouvement de rotation du cylindre d'enroulement 103 en un mouvement de translation d'au moins un organe mené, ici deux organes menés 314 et 316 qui se déplacent ici parallèlement à l'axe Z du cylindre d'enroulement 103.

Le mécanisme de transformation de mouvement comprend un ensemble de pignonnerie, qui comprend à son tour une couronne dentée intérieurement 307 solidaire du rotor 301 et qui engrène avec un pignon allongé 312 qui est supporté librement rotatif par le stator 302 selon un axe parallèle à l'axe Z. Par rapport à l'organe de couplage 304, le pignon allongé 312 s'étend vers l'intérieur du cylindre d'enroulement 103. Il est supporté en rotation à une extrémité dans un corps statorique 321 du stator 302 qui est solidaire de la platine 339 par des vis 338 et de la bague 322, et à l'autre extrémité par une pièce statorique 309 du stator 302 qui est rendue solidaire du corps statorique 305 par des tiges 311 formant cage.

Le mécanisme de transformation de mouvement comprend en outre deux pignons menés 314 et 316, qui constituent ici les organes menés précités et qui engrènent avec le pignon allongé 312. Les pignons menés 314 et 316 ont des filetages qui sont chacun en prise de filetage avec une vis respective 318 et 320 supportée par le stator 302, et plus précisément ayant une extrémité supportée par le corps statorique 321 et l'autre extrémité supportée par la pièce statorique 309.

Les vis 318 et 320 sont fixes en fonctionnement et présentent des pas en sens contraires l'un de l'autre, de sorte que les pignons 314 et 316, qui tournent toujours dans un même sens pour un sens de rotation de la couronne 307 et du pignon allongé 312, se déplacent axialement en sens contraires l'un de l'autre le long des vis 318 et 320. Le pignon allongé 312 est suffisamment long pour toujours engrener avec les pignons menés 314 et 316, quelle que soit leur position le long des vis 318 et 320.

Les deux vis 318 et 320 sont disposées parallèlement au pignon allongé 312 et symétriquement par rapport à un plan passant par l'axe Z et l'axe du pignon allongé 312.

Une rotation de l'organe rotatif 103 dans un sens entraîne un déplacement axial dans un sens de l'un des pignons menés et un déplacement axial en sens contraire de l'autre pignon mené. Si l'organe rotatif 103 tourne en sens inverse, les déplacements axiaux des pignons menés sont également inversés, respectivement.

Chaque organe mené 314, 316 est mobile axialement entre une position de déclenchement prédéterminée, ici proche de la pièce statorique 309, et une position initiale qui est réglable pour régler la course angulaire de l'organe rotatif entre les deux positions angulaires respectives précitées.

Pour régler la position initiale des deux organes menés 314 et 316, on règle séparément la position initiale de chaque organe mené 314, 316 pendant que l'autre est dans sa position de déclenchement prédéterminée. Pour le réglage de la position initiale de chaque pignon mené, le dispositif de détection 300 comprend dans ce mode de réalisation un montage rotatif de chacune des deux vis 318 et 320 dans le corps statorique 321 et la pièce statorique 309.

Une rotation de la vis 318, 320 permet de déplacer axialement le pignon mené correspondant 314, 316 alors que celui-ci est empêché de tourner, du fait de son engrènement avec le pignon allongé 312, lequel est immobile pendant une telle opération de réglage.

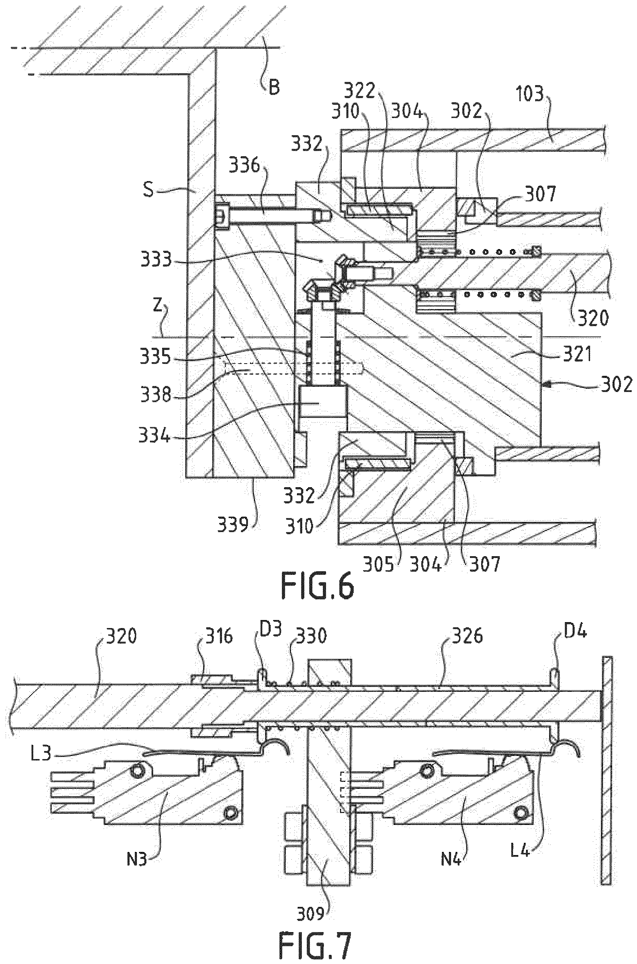

Pour la rotation des vis 318 et 320, chacune est couplée, ici par un renvoi d'angle denté 333 (figure 6), avec un bouton de réglage 334 monté rotatif dans le stator 302. Le bouton de réglage 334 est freiné en rotation par un ressort 335 qui maintient un certain degré de friction dans la rotation du bouton de réglage 334. Dans l'exemple représenté, le bouton de réglage 334 se manoeuvre avec un tournevis.

On règle la position initiale de chaque organe mené de façon que le nombre de tours du cylindre d'enroulement tel que 103 qui est nécessaire pour que l'organe mené passe de sa position initiale à sa position de déclenchement corresponde au nombre de tours du cylindre d'enroulement 103 entre les deux positions extrêmes souhaitées, ici la position haute et la position basse du rideau respectivement.

En pratique, une fois que la position initiale de l'un des organes menés a été réglée, celle de l'autre organe mené est automatiquement bonne, mais un petit réglage fin peut être nécessaire ou souhaitable.

Le dispositif de détection 300 comprend des moyens de détection qui comprennent deux paires de détecteurs N1, N2 respectivement N3, N4, fixés au stator 302, ici à la pièce statorique 309, et deux paires de drapeaux D1, D2 respectivement D3, D4. Le détecteur N1 n'est pas représenté. Les détecteurs N1 et N3 sont utilisés pour émettre un signal de commande tandis que les détecteurs N2 et N4 sont utilisés pour émettre une signalisation.

Les détecteurs N1, N2, N3, N4 comprennent chacun un contacteur sec relié à trois fils, l'un commun, le deuxième normalement ouvert, c'est-à-dire normalement déconnecté du commun, et le troisième normalement fermé, c'est-à-dire normalement connecté au commun.

Chaque paire de drapeaux D1, D2 ou respectivement D3, D4 est réalisée au moyen d'une pièce 324, respectivement 326, sensiblement cylindrique sur laquelle les drapeaux sont réalisés sous la forme de collerettes d'extrémité.

Les pièces 324 et 326 constituent des actionneurs des détecteurs N1, N2, N3, N4. Elles sont rappelées en une position de repos par deux ressorts 328 et 330.

Les pièces 324 et 326 sont placées dans les trajectoires des organes menés 314 et 316 pour être entraînées vers une position d'activation des moyens de détection par les drapeaux lorsque les organes menés 314 et 316 approchent de leurs positions de déclenchement prédéterminées.

Chaque actionneur 324, respectivement 326, est monté coulissant autour de la vis 318, respectivement 320 correspondante.

Les détecteurs N1, N2 respectivement N3, N4 comprennent des leviers L1, L2 (non représentés), respectivement L3, L4.

Les leviers L1, L2 sont disposés de sorte que le drapeau D1, respectivement D2, appuie sur le levier L1, respectivement L2, lorsque l'actionneur est poussé par le pignon mené 314 arrivant en fin de course de déclenchement sur la vis correspondante 318.

Les leviers L3 et L4 sont disposés de la même manière, par rapport aux drapeaux D3 et D4 et à l'organe mené 316.

Ainsi, les détecteurs N1, N2, N3 et N4 détectent la présence des organes menés 314 et 316 dans une position de déclenchement prédéterminée.

Alternativement, les leviers L1, L2 sont disposés de sorte que le drapeau D1, appuie sur le levier L1 préalablement à l'appui par le drapeau D2 sur le levier L2. Ceci est réalisé par un espacement entre les deux leviers L1 et L2 qui est différent de, ici supérieur à, celui entre les deux drapeaux D1 et D2 correspondants.

Les leviers L3 et L4 sont disposés de la même manière, par rapport aux drapeaux D3 et D4 et à l'organe mené 316.

Dans ce cas, les détecteurs N1, N2, N3 et N4 détectent la présence des organes menés 314 et 316 dans au moins une autre position de déclenchement prédéterminée voisine de la position de déclenchement prédéterminée.

Avantageusement, les vis 318 et 320 ont un pourtour évidé au voisinage des actionneurs. Ainsi, en cas d'avarie, si l'organe rotatif 103 continue à tourner au-delà de la position de déclenchement, l'organe mené correspondant s'échappe du filetage de la vis. Quand le mouvement repart dans l'autre sens, le ressort de rappel de l'actionneur pousse l'organe mené dans le sens de se réengager sur le filetage de la vis.

Le dispositif de détection 300 est maintenant décrit de manière fonctionnelle.

Lorsqu'une manoeuvre du rideau est nécessaire, le cylindre d'enroulement 103 est mis en rotation dans le sens approprié et entraîne l'organe de couplage 304.

La couronne dentée 307 engrène avec la denture extérieure du pignon allongé 312, laquelle entraîne les deux pignons 314 et 316 en rotation via les dentures extérieures des deux pignons. Les deux pignons 314 et 316 étant en prise avec les vis 318 et 320 à pas contraires, leurs mouvements sont opposés.

À chaque fin de course, l'un des pignons 314 ou 316 est en position initiale tandis que l'autre pignon 316 ou 314 sollicite l'actionneur correspondant, dont les drapeaux D1, D2, ou respectivement D3, D4 provoquent une détection de l'une respective des fins de course.

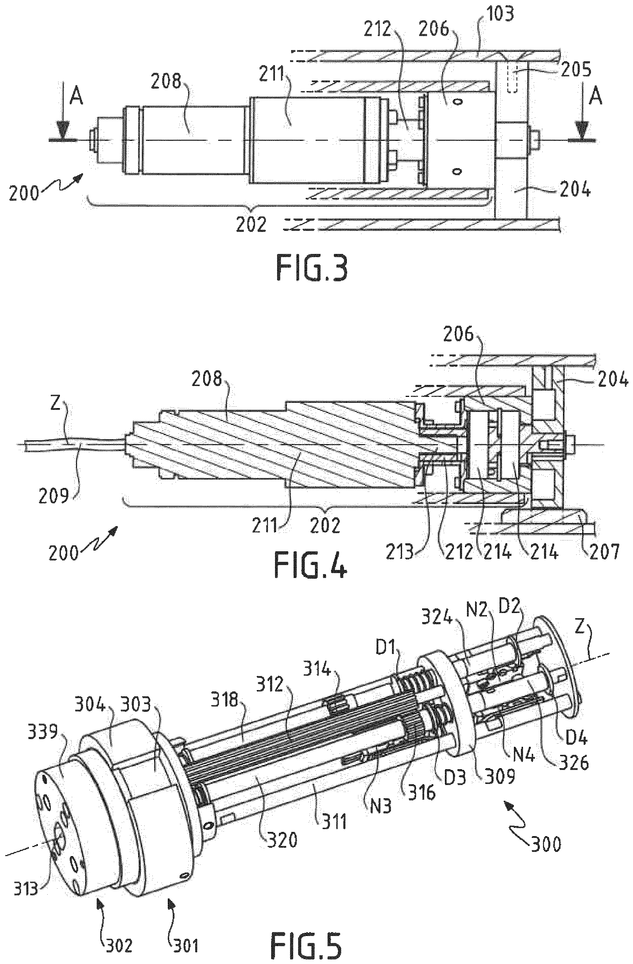

Comme représenté aux figures 1 à 4, le système 100 comprend en outre un dispositif de motorisation 200 comprenant une partie rotorique d'entraînement 204 couplée en rotation avec le cylindre d'enroulement 103 par une clavette 207 (figure 4) solidaire du cylindre d'enroulement 103 et engagée dans une conformation, ici une rainure 205, de la partie rotorique d'entraînement 204.

Le dispositif de motorisation est coaxial avec l'axe Z du dispositif de détection 300. Il comprend la partie statorique 202 qui est couplée de façon non rotative au stator 302 du dispositif de détection 300 par un élément de réaction 102 qui est ici un tube fixe 102 qui s'étend axialement à l'intérieur du cylindre d'enroulement 103. Le stator 302 et la partie statorique 202 sont fixées rigidement au tube fixe 102.

Dans l'exemple préféré, le dispositif de motorisation 200 est entièrement logé dans le logement intérieur axial du cylindre d'enroulement 103 au-delà, et même à une certaine distance au-delà de l'extrémité distale (c'est à dire côté détecteurs) du dispositif de détection, ladite distance étant fonction de la longueur du tube de réaction 102. Des fils d'alimentation 209 du dispositif de motorisation 200 s'étendent dans le tube de réaction 102 pour sortir du système 100 via un passage (non complètement représenté) à travers le stator 302, comprenant un orifice central 313 de la platine 339 (figure 5), comme les fils raccordés aux détecteurs D1 à D4.

La partie rotative d'entraînement 204 est disposée axialement à l'opposé du dispositif de détection 300.

Le dispositif de motorisation comprend un moteur 208 et un réducteur 211 ayant un arbre de sortie 213 dirigé à l'opposé du détecteur 300.

Le tube de réaction 102 enveloppe presque complètement le dispositif de motorisation 200 et le dispositif de détection 300 à l'exception des parties d'entraînement 204 et 304 qui dépassent chacune à une extrémité respective du tube 102. Le dispositif de motorisation 200 et le dispositif de détection 300 sont de conformation très généralement cylindrique et sont adaptés pour être au moins partiellement emboîtés dans le tube de réaction 102, chacun à l'une de ses extrémités, comme l'illustre la figure 1 et comme on vient de le décrire. Du côté du dispositif de motorisation, le tube de réaction 102 est fixé sur la surface extérieure de la bague 206.

Le dispositif de motorisation 200 comprend la partie statorique 202 et une partie rotorique (non représentée) comprenant la partie d'entraînement 204.

La partie statorique 202 comprend, axialement et de la gauche vers la droite sur la figure 3, un stator de moteur électrique 208 et une bague extérieure d'un palier 206 du cylindre d'enroulement 103.

Le palier 206 supporte en rotation par deux roulements 214 un arbre de transmission 212 fixé à l'arbre 213 du moto-réducteur, et reliant celui-ci à la pièce d'entraînement 204. Le moteur 208 est de voltage inférieur à 48 volts et comprend un frein. Le moteur 208 peut être adapté à une plage de charge nécessaire à soulever le rideau.

L'arbre de transmission 212 est par ailleurs monté claveté sur l'arbre de sortie 213 du réducteur 211 et sur la partie rotative d'entraînement 204.

Le palier porteur 206 est disposé axialement entre le moteur 208 et le réducteur 211 d'une part, et la partie rotative d'entraînement 204 d'autre part.

Le dispositif de motorisation 200 est maintenant décrit de manière fonctionnelle.

Lors d'une demande de séparation d'un espace ou d'un lieu, et lorsque le frein du moteur 208 retenant en position haute le rideau de type à déploiement gravitationnel en manque de courant est libéré, la charge du rideau est suffisante pour que le rideau se déploie et entraîne la partie rotative d'entraînement 204 en rotation au moyen du cylindre d'enroulement 103.

Le moteur 208 fonctionne comme une dynamo qui génère alors du courant. Cette génération est réalisée par induction de courant dans le solénoïde du moteur 208. Ce courant est régulé passivement, c'est à dire sans alimentation électrique, afin d'obtenir une vitesse de descente désirée.

Lorsque le rideau atteint sa position extrême inférieure, cela est détecté par le dispositif de détection 300 comme exposé plus haut.

En variante, une sécurité est activée lors d'une rencontre impromptue avant la descente complète du rideau jusqu'à la position sélectionnée et le frein du moteur 208 est alors activé.

Pour remettre le rideau de type à déploiement gravitationnel en position d'attente, il faut alimenter électriquement le moteur 208 et libérer son frein. Une fois alimenté, le moteur 208 entraîne en rotation la partie rotative d'entraînement 204. La partie rotative d'entraînement 204 entraîne elle-même la rotation du cylindre d'enroulement 103 qui entraîne lui même l'enroulement du rideau autour de ce dernier.

À partir d'une certaine longueur de rideau enroulée et prédéfinie, le moteur s'arrête après détection de cette position par le dispositif de détection 300 et la position est maintenue par le frein du moteur 208. Cette position peut par exemple correspondre à l'alignement du rideau avec le niveau d'un faux plafond.

En cas de coupure de courant, il y a automatiquement déploiement du rideau puisque le frein n'est plus alimenté.

Bien sûr, l'invention n'est pas limitée aux exemples qui viennent d'être décrits et de nombreux aménagements peuvent être apportés à ces exemples sans sortir du cadre de l'invention. De plus, les différentes caractéristiques, formes, variantes et modes de réalisation de l'invention peuvent être associés les uns avec les autres selon diverses combinaisons dans la mesure où ils ne sont pas incompatibles ou exclusifs les uns des autres.

### Nomenclature

- 100: système
- 102: tube fixe de réaction
- 103: cylindre d'enroulement
- 200: dispositif de motorisation
- 202: partie statorique du dispositif de motorisation
- 204: partie d'entraînement de motorisation
- 205: conformation (rainure) - partie intégrante du tube 103
- 206: palier porteur
- 207: clavette solidaire du cylindre d'enroulement 103
- 208: moteur
- 209: fils
- 211: réducteur
- 212: arbre de transmission
- 213: arbre de sortie
- 214: roulements à bille
- 300: dispositif de détection
- 301: rotor de détection
- 302: stator de détection
- 303: conformation de couplage
- 304: organe de couplage du dispositif de détection
- 305: bague extérieure
- 307: couronne dentée intérieurement
- 308: moyens de détection
- 309: pièce statorique
- 310: palier à aiguilles
- 311: tiges
- 312: pignon allongé
- 313: orifice de platine
- 314, 316: organes menés, pignons
- 318, 320: vis
- 321: cors statorique
- 322: bague intérieure
- 324, 326: pièce de drapeau
- 328, 330: ressorts
- 332: palier
- 333: renvoi d'angle denté
- 334: bouton de réglage
- 335: ressort de freinage
- 336: vis de palier
- 338: vis de stator
- 339: platine de fixation
- B: bâti
- D1, D2, D3, D4: drapeau
- Fm, Fd: vis de fixation
- L1, L2, L3, L4: leviers
- N1, N2, N3, N4: détecteur
- S: support
- Z: axe de rotation

## Revendications

1. Dispositif de détection (300) d'une position d'un élément entraîné par un organe rotatif (103) sur une course correspondant à plus qu'un tour complet de l'organe rotatif (103), **caractérisé en ce qu'**il comprend :
- un stator (302),
- un organe de couplage (304) mobile en rotation par rapport au stator (302) et capable d'être couplé en rotation avec l'organe rotatif (103),
- un mécanisme de transformation de mouvement monté fonctionnellement entre l'organe de couplage (304) et au moins un organe mené (314, 316),
- des moyens de détection pour détecter la présence d'au moins un organe mené (314, 316) dans une position de déclenchement prédéterminée,
les moyens de transformation étant tels que l'organe mené (314, 316) ne passe qu'une seule fois par la position de déclenchement prédéterminée lorsque l'organe rotatif (103) effectue plus d'un tour de rotation dans le même sens, l'organe mené (314, 316) étant mené entre une position initiale et la position de déclenchement prédéterminée,
**caractérisé en ce que** le dispositif (300) comprend des moyens de réglage de la position initiale de l'organe mené (314, 316).

2. Dispositif de détection selon la revendication précédente, comprenant d'autres moyens de détection pour détecter la présence de l'organe mené (314, 316) dans au moins une autre position de déclenchement prédéterminée voisine de la position de déclenchement prédéterminée.

3. Dispositif selon la revendication 1 ou 2, dans lequel pour chaque organe mené (314, 316) les moyens de détection comprennent deux détecteurs (N1, N2, N3, N4), l'un pour une commande, l'autre pour une signalisation.

4. Dispositif de détection selon l'une quelconque des revendications précédentes, dans lequel l'au moins un organe mené (314, 316) comprend au moins deux organes menés (314, 316) et le mécanisme de transformation de mouvement confère aux deux organes menés (314, 316) des mouvements différents l'un de l'autre, et en ce que les moyens de détection sont capables de détecter la présence de chacun des deux organes menés (314, 316) dans au moins une position prédéterminée respective.

5. Dispositif de détection selon la revendication précédente, **caractérisé en ce que** la position prédéterminée de chacun des deux organes menés (314, 316) correspond à une position angulaire respective de l'organe rotatif (103), et chaque organe mené (314, 316) est mobile entre sa position de déclenchement prédéterminée et une position initiale qui est réglable pour régler la course angulaire de l'organe rotatif entre les deux positions angulaires respectives précitées.

6. Dispositif selon la revendication précédente, dans lequel pour régler la position initiale des deux organes menés (314, 316), on règle la position initiale d'un seul des deux organes menés (314, 316) pendant que l'autre est dans sa position de déclenchement prédéterminée.

7. Dispositif selon l'une quelconque des revendications précédentes, comprenant un actionneur (324, 326) des moyens de détection (308), qui est rappelé en position de repos par un ressort (328, 330), et qui est placé dans la trajectoire de l'organe mené (314, 316) pour être entraîné vers une position d'activation des moyens de détection lorsque l'organe mené (314, 316) approche de sa position de déclenchement prédéterminée.

8. Dispositif selon la revendication précédente, comportant des moyens d'échappement pour l'organe mené en position de déclenchement, et dans lequel le ressort tend à réengager l'organe mené avec le mécanisme de transformation de mouvement lorsque le sens de rotation de l'organe rotatif s'inverse.

9. Dispositif selon l'une quelconque des revendications précédentes, dans lequel le mécanisme de transformation de mouvement est du type à vis et écrou pour transformer le mouvement rotatif de l'organe de couplage (304) en un mouvement de déplacement longitudinal de l'organe mené (314, 316).

10. Dispositif selon la revendication précédente, en combinaison avec la revendication 5 ou 6, dans lequel le mécanisme de transformation de mouvement comprend une vis fixée (318, 320) dans une position angulaire et l'organe mené (314, 316) comprend un filetage intérieur en prise avec la vis et une denture extérieure qui engrène avec un pignon allongé (312) axialement entraîné en rotation par l'organe de couplage (304), ledit dispositif comportant en outre des moyens (333 ; 334 ; 335) prévus pour régler la position angulaire de la vis (318, 320) de façon à régler la position initiale de l'organe mené (314, 316).

11. Dispositif selon l'une quelconque des revendications précédentes, dans lequel les moyens de détection comprennent au moins un contacteur sec relié à trois fils, l'un commun, le deuxième normalement ouvert et le troisième normalement fermé.

12. Système (100) prévu pour être monté dans un logement axial d'un organe rotatif (103), en particulier un tube porteur d'un rideau enroulable, ledit système comprenant un dispositif de détection (300) selon l'une des revendications précédentes, **caractérisé en ce que** l'organe de couplage (304) est supporté en rotation sur le stator (302) par un palier (332) qui est en même temps un palier porteur de l'organe rotatif (103), tandis que le stator (302) est destiné à être fixé à un bâti (B) environnant, de sorte que le dispositif de détection (300) constitue en même temps un support de l'organe rotatif (103), en particulier le tube porteur et le rideau fixé sur lui.

13. Système selon la revendication précédente, ledit système (100) étant essentiellement logé à l'intérieur du logement axial, sans faire saillie radialement vers l'extérieur par rapport audit logement axial.

14. Système selon la revendication 12 ou 13, comprenant en outre dans le logement axial un dispositif de motorisation (200) comprenant une partie rotorique d'entraînement (204) qui en service est couplée en rotation à l'organe rotatif pour l'entraînement en rotation de celui-ci, et une partie statorique qui est reliée au stator (302) du dispositif de détection (300) par un élément de réaction (102) capable de transmettre au stator du dispositif de détection le couple de réaction du moteur, et le dispositif de motorisation (200) comprend un moteur (208) à stator extérieur, et la partie statorique reliée au stator extérieur entoure un arbre de transmission (212) entre le rotor du moteur (208) et la partie rotorique d'entraînement (204), et au moins un palier (214, 216) est agencé entre la partie statorique (206) et l'arbre de transmission (212).

15. Système selon la revendication précédente, dans lequel des fils d'alimentation (209) du dispositif de motorisation (200) s'étendent à travers le dispositif de détection (300) dans un canal axial de l'élément de réaction (102).

16. Rideau de type à déploiement gravitationnel en manque de courant, équipé d'un système selon l'une quelconque des revendications 12 à 15, disposé à l'intérieur du tube porteur du rideau (103), constituant l'organe rotatif auquel le rotor du dispositif de détection (300) et la partie rotorique du dispositif de motorisation (200) sont accouplés.

## Patentansprüche

1. Vorrichtung (300) zur Erkennung einer Position eines von einem Drehorgan (103) angetriebenen Elements entlang eines Weges, der mehr als einer vollen Umdrehung des Drehorgans (103) entspricht, **dadurch gekennzeichnet, dass** sie aufweist:
- einen Stator (302),
- ein Kopplungsorgan (304), das in Bezug auf den Stator (302) drehend bewegbar ist und in der Lage ist, mit dem Drehorgan (103) drehgekoppelt zu werden,
- einen Bewegungsumwandlungsmechanismus, der funktionell zwischen dem Kopplungsorgan (304) und mindestens einem geführten Organ (314, 316) angeordnet ist,
- Erkennungseinrichtungen zum Erkennen des Vorhandenseins mindestens eines geführten Organs (314, 316) in einer vorbestimmten Auslöseposition,
wobei die Umwandlungseinrichtungen derart ausgebildet sind, dass das geführte Organ (314, 316) die vorbestimmte Auslöseposition nur ein einziges Mal passiert, während das Drehorgan (103) mehr als eine Umdrehung in der gleichen Richtung durchführt, wobei das geführte Organ (314, 316) zwischen einer Ausgangsposition und der vorbestimmten Auslöseposition geführt ist,
**dadurch gekennzeichnet, dass**
die Vorrichtung (300) Einrichtungen zum Einstellen der Ausgangsposition des geführten Organs (314, 316) aufweist.

2. Erkennungsvorrichtung nach dem vorhergehenden Anspruch, mit anderen Erkennungseinrichtungen zum Erkennen des Vorhandenseins des geführten Organs (314, 316) in mindestens einer anderen vorbestimmten Auslöseposition, die der vorbestimmten Auslöseposition benachbart ist.

3. Vorrichtung nach Anspruch 1 oder 2, bei welcher die Erkennungseinrichtungen für jedes geführte Organ (314, 316) zwei Detektoren N1, N2, N3, N4) aufweisen, einen zur Steuerung, den anderen zu Signalgebung.

4. Erkennungsvorrichtung nach einem der vorhergehenden Ansprüche, bei welcher das mindestens eine geführte Organ (314, 316) mindestens zwei geführte Organe (314, 316) aufweist und der Bewegungsumwandlungsmechanismus den beiden geführten Organen (314, 316) voneinander verschiedene Bewegungen vermittelt, und wobei die Erkennungseinrichtungen geeignet sind das Vorhandensein jedes der beiden geführten Organe (314, 316) an mindestens einer der jeweiligen vorbestimmten Positionen zu erkennen.

5. Erkennungsvorrichtung nach dem vorangehenden Anspruch, **dadurch gekennzeichnet, dass** die vorbestimmte Position jedes der beiden geführten Organe (314, 316) einer jeweiligen Winkelposition des Drehorgans (103) entspricht, und dass jedes geführte Organ (314, 316) zwischen seiner vorbestimmten Auslöseposition und einer Ausgangsposition bewegbar ist, welche zum Einstellen des Winkelwegs des Drehorgans zwischen den beiden genannten jeweiligen Winkelpositionen einstellbar ist.

6. Vorrichtung nach dem vorangehenden Anspruch, bei welcher zur Einstellung der Ausgangsposition der beiden geführten Organe (314, 316) die Ausgangsposition eines einzelnen der geführten Organe (314, 316) eingestellt wird, während das andere in seiner vorbestimmten Auslöseposition ist.

7. Vorrichtung nach einem der vorhergehenden Ansprüche, mit einem Aktuator (324, 326) der Erkennungseinrichtungen (308), der durch eine Feder (328, 330) in eine Ruheposition vorgespannt ist, und der in der Bahn des geführten Organs (314, 316) angeordnet ist, um in Richtung einer Aktivierungsposition der Erkennungseinrichtungen angetrieben zu werden, wenn das geführte Organ (314, 316) sich seiner vorbestimmten Auslöseposition nähert.

8. Vorrichtung nach dem vorangehenden Anspruch, mit Hemmeinrichtungen für das geführte Organ in der Auslöseposition, und wobei die Feder geeignet ist, das geführte Organ wieder in Eingriff mit dem Bewegungsumwandlungsmechanismus zu bringen, wenn sich die Drehrichtung des Drehorgans umkehrt.

9. Vorrichtung nach einem der vorhergehenden Ansprüche, bei welcher der Bewegungsumwandlungsmechanismus vom Spindelgetriebetyp ist, um die Drehbewegung des Kopplungsorgans (304) in eine längsgerichtete Verschiebungsbewegung des geführten Organs (314, 316) umzuwandeln.

10. Vorrichtung nach dem vorangehenden Anspruch, in Kombination mit Anspruch 5 oder 6, bei welcher der Bewegungsumwandlungsmechanismus eine in einer Winkelposition fixierte Spindel (318, 320) aufweist und das geführte Organ (314, 316) ein Innengewinde, das mit der Spindel in Eingriff ist, und eine Außenverzahnung aufweist, die mit einem in axialer Richtung langgestreckten Zahnrad (312) kämmt, das von dem Kopplungsorgan (304) drehend angetrieben ist, wobei die Vorrichtung ferner Einrichtungen (333; 334; 335) aufweist, welche dazu vorgesehen sind, die Position der Spindel (318, 320) einzustellen, um die Ausgangsposition des geführten Organs (314, 316) einzustellen.

11. Vorrichtung nach einem der vorhergehenden Ansprüche, bei welcher die Erkennungseinrichtungen mindestens einen trockenen Kontakt aufweisen, der mit drei Drähten verbunden ist, von denen der eine ein gemeinsamer Draht, der zweite normalerweise offen und der dritte normalerweise geschlossen ist.

12. System (100) zum Einbau in einer axialen Aufnahme eines Drehorgans (103), insbesondere eines Trägerrohres eines aufrollbaren Vorhangs, wobei das System eine Erkennungsvorrichtung (300) nach einem der vorhergehenden Ansprüche aufweist, **dadurch gekennzeichnet, dass** das Kopplungsorgan (304) an dem Stator (302) durch ein Lager (332) drehbar gestützt ist, das gleichzeitig ein Stützlager des Drehorgans (103) ist, während der Stator (302) zur Befestigung an einem umgebenden Gehäuse (B) vorgesehen ist, derart, dass die Erkennungsvorrichtung (300) gleichzeitig eine Stütze für das Drehorgan (103) insbesondere für das Trägerrohr und den daran befestigten Vorhang bildet.

13. System nach dem vorangehenden Anspruch, wobei das System (100) im Wesentlichen im Inneren der axialen Aufnahme aufgenommen ist, ohne in Bezug auf die axiale Aufnahme radial nach außen zu ragen.

14. System nach Anspruch 12 oder 13, ferner mit einer Motorantriebsvorrichtung (200) in der axialen Aufnahme, mit einem Antriebsrotorteil (204), welches im Gebrauch drehend mit dem Drehorgan gekoppelt ist, um dieses drehend anzutreiben, und einem Statorteil, das mit dem Stator (302) der Erkennungsvorrichtung (300) durch ein Reaktionselement (102) verbunden ist, das in der Lage ist, an den Stator der Erkennungsvorrichtung das Reaktionsdrehmoment des Motors zu übertragen, und wobei die Motorantriebsvorrichtung (200) einen Motor (208) mit äußerem Stator aufweist, und wobei das mit dem äußeren Stator verbundene Statorteil eine Antriebswelle (212) zwischen dem Rotor des Motors (208) und dem Antriebsrotorteil (204) umgibt, und wobei mindestens ein Lager (214, 216) zwischen dem Statorteil (206) und der Antriebswelle (212) angeordnet ist.

15. System nach dem vorangehenden Anspruch, bei welchem Versorgungskabel (209) der Motorantriebsvorrichtung (200) durch die Erkennungsvorrichtung (300) in einem axialen Kanal des Reaktionselements (102) verlaufen.

16. Vorhang von dem Typ, der bei fehlendem Strom unter Schwerkraftwirkung aufgerollt wird, mit einem System nach einem der Ansprüche 12 bis 15, das im Inneren des Vorhangträgerrohres (103) angeordnet ist, welches das Drehorgan bildet, mit welchem der Rotor der Erkennungsvorrichtung (300) und das Rotorteil der Motorantriebsvorrichtung (200) gekoppelt sind.

## Claims

1. A detection device (300) for detecting a position of an element driven by a rotary member (103) over a stroke corresponding to more than one full revolution of the rotary member (103), **characterized in that** it comprises:
- a stator (302),
- a coupling member (304) rotatably movable with respect to the stator (302) and capable of being rotatably coupled with the rotary member (103),
- a movement transformation mechanism operably mounted between the coupling member (304) and at least one driven member (314, 316),
- detection means for detecting the presence of at least one driven member (314, 316) in a predetermined triggering position,
the transformation means being such that the driven member (314, 316) only passes once through the predetermined triggering position when the rotary member (103) makes more than one full revolution in the same direction,
the driven member (314, 316) being driven between an initial position and the predetermined triggering position,
**characterized in that** the device (300) comprises means for setting the initial position of the driven member (314, 316) .

2. The detection device according to the preceding claim, comprising other detection means for detecting the presence of the driven member (314, 316) in at least one other predetermined triggering position close to the predetermined triggering position.

3. The device according to claim 1 or 2, wherein for each driven member (314, 316), the detection means comprise two detectors (N1, N2, N3, N4), one for controlling, the other for signaling.

4. The detection device according to any of the preceding claims, wherein the at least one driven member (314, 316) comprises at least two driven members (314, 316) and the movement transformation mechanism provides both driven members (314, 316) with movements different from each other, and the detection means are capable of detecting the presence of each of both driven members (314, 316) in at least one respective predetermined position.

5. The detection device according to the preceding claim, **characterized in that** the predetermined position of each of both driven members (314, 316) corresponds to a respective angular position of the rotary member (103), and each driven member (314, 316) is movable between its predetermined triggering position and an initial position which is settable to set the angular stroke of the rotary member between both aforementioned respective angular positions.

6. The device according to the preceding claim, wherein to set the initial position of both driven members (314, 316), the initial position of a single one of both driven members (314, 316) is set whereas the other in its predetermined triggering position.

7. The device according to any of the preceding claims, comprising an actuator (324, 326) of the detection means (308), which is returned to a rest position by a spring (328, 330), and which is placed in the trajectory of the driven member (314, 316) to be driven to a position for activating the detection means when the driven member (314, 316) comes closer to its predetermined triggering position.

8. The device according to the preceding claim, comprising exhaust means for the driven member in the triggering position, and wherein the spring tends to reengage the driven member with the movement transformation mechanism when the direction of rotation of the rotary member is reversed.

9. The device according to any of the preceding claims, wherein the movement transformation mechanism is of the screw and nut type to transform the rotary movement of the coupling member (304) into a longitudinal displacement movement of the driven member (314, 316).

10. The device according to the preceding claim, in combination with claim 5 or 6, wherein the movement transformation mechanism comprises a screw (318, 320) fixed in an angular position and the driven member (314, 316) comprises an internal thread engaged with the screw and external teeth which mesh with an elongated pinion gear (312) axially rotatably driven by the coupling member (304), said device further comprising means (333; 334; 335) provided to set the angular position of the screw (318, 320) so as to set the initial position of the driven member (314, 316).

11. The device according to any of the preceding claims, wherein the detection means comprise at least one dry contactor connected with three wires, the first one being common, the second one normally open and the third one normally closed.

12. A system (100) provided to be mounted in an axial housing of a rotary member (103), in particular a carrier tube carrying a roll-up curtain, said system comprising a detection device (300) according to one of the preceding claims, **characterized in that** the coupling member (304) is rotatably supported on the stator (302) by a bearing (332) which is at the same time a bearing carrying the rotary member (103), whereas the stator (302) is for being fixed to a surrounding frame (B), such that the detection device (300) makes up at the same time a support for the rotary member (103), in particular the carrier tube and the curtain fixed thereon.

13. The system according to the preceding claim, said system (100) being substantially housed inside the axial housing, without radially outwardly projecting from said axial housing.

14. The system according to claim 12 or 13, further comprising in the axial housing a motorization device (200) comprising a driving rotor part (204) which, in use, is rotatably coupled with the rotary member for rotatably driving the same, and a stator part which is connected to the stator (302) of the detection device (300) by a reaction element (102) capable of transmitting to the stator of the detection device the reaction torque of the motor, and the motorization device (200) comprises a motor (208) with an outer stator, and the stator part connected to the outer stator surrounds a transmission shaft (212) between the rotor of the motor (208) and the driving rotor part (204), and at least one bearing (214, 216) is arranged between the stator part (206) and the transmission shaft (212).

15. The system according to the preceding claim, wherein wires (209) for powering the motorization device (200) extend through the detection device (300) in an axial channel of the reaction element (102).

16. A curtain of the gravitational deployment type in case of power shortage, equipped with a system according to any of claims 12 to 15, disposed inside the carrier tube carrying the curtain (103), making up the rotary member with which the rotor of the detection device (300) and the rotor part of the motorization device (200) are mated.
